Europäisches Patentamt

European Patent Office

Office européen des brevets

(11) Publication number: **0 079 707**
**B1**

(19)

# (12) EUROPEAN PATENT SPECIFICATION

(45) Date of publication of patent specification: **23.07.86**

(51) Int. Cl.⁴: **A 23 K 1/175, A 23 K 1/17**

(21) Application number: **82305742.7**

(22) Date of filing: **28.10.82**

(54) **Preparation of animal feed premixes.**

(30) Priority: **30.10.81 US 316614**

(43) Date of publication of application:
**25.05.83 Bulletin 83/21**

(45) Publication of the grant of the patent:
**23.07.86 Bulletin 86/30**

(84) Designated Contracting States:
**AT BE CH DE FR GB IT LI LU NL SE**

(56) References cited:
**DD-A- 152 278**
**GB-A-1 500 268**
**GB-A-2 057 244**
**US-A-3 952 095**
**US-A-4 034 120**
**US-A-4 267 197**

(73) Proprietor: **ELI LILLY AND COMPANY**
**307, East McCarty Street**
**Indianapolis Indiana 46285 (US)**

(72) Inventor: **Vanevenhoven, Peter Watson**
**Box 319, R.R. 13**
**West Terre Haute Indiana 47885 (US)**
Inventor: **Wallace, John Michael**
**1603 Vineyard Circle**
**Indianapolis Indiana 46260 (US)**

(74) Representative: **Crowther, Terence Roger et al**
**Erl Wood Manor**
**Windlesham Surrey GU20 6PH (GB)**

Courier Press, Leamington Spa, England.

# Description

This invention concerns a particulate animal feed premix comprising, as its active ingredient, a fermentation product which is chemically stable and biologically available in the presence of a non-swelling absorptive clay, substantially all of the biomass and the lipids in the fermentation broth which produced the fermentation product, wherein the fermentation broth contains at least 10 milligrams per millilitre of lipids and, as substantially the only carrier, an amount of a non-swelling absorptive clay which is at least about 25% of the amount of fermentation solids and a process for preparing it.

The product of this invention is particularly advantageous, because it is a flowable and substantially dust-free premix Present-day environmental and safety standards require the control of dust in biologically active products, such as animal feed premixes. Further, the particle size of a feed premix prepared according to this invention is easily controlled in any desired range, allowing the premix to be mixed easily with any desired kind of animal feed. Thus, the resulting animal feed can be quite homogeneous with respect to the concentration of the animal health product. Those who work in the art are aware that losses and inefficiencies occur when a premix contains either excessively coarse or excessively fine particles, because the coarse particles tend to remain at the top of a body of animal feed, and fines may be both lost by dusting and by settling out of the body of animal feed.

Particulate animal feed premixes are conventionally used in the animal husbandry industry as an easily stored and transported form of animal health products which are administered by mixing them with the animals' feed. Such animal health products are often called "feed additives", and include, to mention only a few, antibacterials, anticoccidials, feed efficiency improvers, anthelmintics, and the like.

Premixes including the entire biomass are generally quite difficult to handle in processing, because of the residual lipids, which make the product sticky, resistant to movement, and difficult to dry. In addition, fermentation products of the ionophore class, such as monensin and narasin, have especially difficult physical properties, in that they are resinous or tacky. Use of a clay in accordance with this invention completely alleviates these handling problems, makes biomass premixes free-flowing and prevents fouling equipment.

Drying of prior art biomass premixes has been difficult, because of mass transfer problems in the form of case-hardening of lumps or particles of product in the dryer. Evidently, in the prior art, lipids and drug migrated to the outside of particles and effectively sealed the surface to further drying. Use of clay according to this invention completely prevents case - hardening and allows quick, economical drying.

Fermentation products have been made in the form of animal feed premixes in the past by various techniques. In many cases, the fermentation products have been isolated and purified to obtain the pure compound, and have then been impregnated on particulate carriers such as soybean meal, corncob grits, alfalfa meal and the like. In other cases, the entire fermentation broth has been dried to a solid mass, as by drum drying, which mass has then been mixed with a particulate carrier, compressed and sized to the desired particle size range.

The use of clays in animal feeds has long been known in animal husbandry, for example by articles such as Collings et al., J. Animal Sci. 50, 272-77 (1980), and articles cited therein.

GB—A—2027013 discloses a solid animal feed premix comprising compound M 139603 and an attapulgus clay or talc.

There has been discovered a particulate animal feed premix comprising, as its active ingredient, a fermentation product which is chemically stable and biologically available in the presence of a non-swelling absorptive clay, substantially all of the biomass and lipids in the fermentation broth which produced the fermentation product, wherein the fermentation broth contains at least 10 milligrams per millilitre of lipids and, as substantially the only carrier, an amount of a non-swelling absorptive clay which is at least about 25% of the amount of fermentation solids to confer acceptable handling properties upon the mixture.

There has also been discovered a process for preparing a particulate animal feed premix as above described which comprises adding to the fermentation broth which produced the fermentation product, or to a concentrate thereof, as substantially the only carrier, an amount of a non-swelling absorptive clay which is at least about 25% of the amount of fermentation solids, and processing the mixture to give it the desired particle size.

In this document, all particle sizes are measured and described in terms of the United States Standard sieve series. Characteristics of mesh sizes used in this document include:

| Mesh | Sieve opening m.m |
|---|---|
| 8 | 2.38 |
| 20 | .84 |
| 30 | .59 |
| 80 | .177 |
| 150 | .099 |

As has been briefly discussed above, one of the more important characteristics of this invention is its ability to prepare feed premixes which are substantially dust-free. The characteristics of the clay used as the diluent allow the particle size of the feed premixes to be controlled in any reasonably desirable range. In general, the broadest range likely to be useful is between U.S. 150 mesh and 8 mesh. A substantial proportion of particles finer than 150 mesh is likely to allow the feed premix to be excessively dusty; of course, a small proportion, in the range of not more than about 3—4%, of −150 mesh particles is not particularly harmful.

It is also notable that the feed premixes prepared according to the preferred process of this invention are quite tough, and the particles do not appreciably abrade, as in shipping and mixing, to form dust by loss from the larger particles.

The particle size range in which the premix is finished is entirely at the convenience of the operator, but some guidance may be given. In general, it is preferable to use quite a small particle size range for poultry, which consume only a small amount of the fermentation product per day, and a larger particle size for larger animals such as swine and cattle. Accordingly, particle size ranges such as from 20 to 80 mesh are convenient for larger animal use, and fine particle size ranges such as from 80 to 150 mesh are useful for poultry and perhaps for very small animals such as rabbits. The particle size range also depends, in part, on the desired concentration of the fermentation product in the animal feed to be made from the premix; if the concentration is to be very small, then the fermentation product is likely to be more homogeneously mixed through the animal feed if the feed premix is of small particle size.

Further, in the event that the approximate particle size of the animal feed is known, the animal feed premix can be sized to approximately the same range, and thereby obtain more homogeneous final feed mixtures.

A major problem in the preparation of biomass and lipid-containing animal feed premixes arises when the fermentation product is low-melting, or when the fermentation product readily dissolves in the lipid fraction or forms a low-melting eutectic with it. Either of these conditions causes a serious problem in drying the premix, since it obviously becomes sticky and adheres to the drying and handling equipment. One of the major advantages of the process of this invention is that it easily deals with low-melting or eutectic-forming fermentation products, as well as with products which are produced in broths containing large amounts of lipids, and can form hard, free-flowing premixes in spite of such conditions.

This invention is applicable to feed premixes of any fermentation product which is chemically stable and biologically available in the presence of non-swelling absorptive clays. The fermentation products are those which are prepared in fermentation broths containing relatively high concentrations of lipids, such as 10 milligrams per milliliter or more. The process of this invention is particularly and unexpectedly efficient in preparing feed premixes comprising such fermentation products.

The most preferred fermentation products for use in this invention are monensin, a well-known animal health product, and narasin, U.S. Patent 4,038,384. Other preferred fermentation products used in this invention include hygromycin, a well-known anthelmintic; actaplanin, U.S. Patent 3,952,095; salinomycin, the use of which as a growth promoter is described in U.S. Patent 4,085,224; and lasalocid, the use of which as a feed efficiency improver is described in U.S. Patent 3,839,557.

Further preferred fermentation products are avoparcin, also called AV290, an antibiotic described in U.S. Patent 3,338,786; the growth promoting antibiotic thiopeptin, U.S. Patent 3,761,587; flavomycin, an antibiotic also called moenomycin, U.S. Patent 3,992,263; virginiamycin, trademarked Staphylomycin, U.S. Patent 3,325,359, *Microbiol. Rev. 43*, 145—98, and De Somer et al., *Anti. and Chemother. 5*, 632 (1955); avilamycin, U.S. Patent 3,131,126; and bacitracin, a long-known antibacterial.

One fermentation product which is not suitable for use in this process is tylosin, which is unacceptably bound by the clay.

The premixes of this invention are of the type including the lipids and biomass in the fermentation broth which produced the fermentation product which is the active ingredient. Such premixes are coming into more and more wide use, because they avoid the expensive isolation and purification of the fermentation product. The premixes are described as comprising substantially all of the biomass and lipids of the fermentation broth; it is possible, of course, that the particular process in use in a given case may exclude some relatively minor part of the biomass or lipids from the product. A premix may contain substantially all of the solids in the fermentation broth, and be prepared essentially merely by the removal of water from the broth, or it may be prepared by separating some of the water-soluble portions of the broth before manufacture of the premix is started.

The methods by which the fermentation product, and the biomass and lipids with which it is combined in the broth, are harvested depend on the manner in which the fermentation product is produced. If a substantial part of the fermentation product is in the aqueous part of the broth, fewer alternatives are available than when the fermentation product is in or bound to the cells.

One method of harvest which is always applicable is to combine the clay with the whole broth, and dry the mixture. Such procedure may present difficulties, however, as will be discussed below, in that such a large amount of clay is needed to absorb the broth that the desired product potency may not be attainable except with an excessive recycle ratio. In general, it is preferred to concentrate the broth in some manner before the clay is added to it.

When a substantial amount of the fermentation product is dissolved in the aqueous part of the broth, the broth must be concentrated in such a manner as to remove water and leave the product, as by distillation or evaporation. Such methods are common, and may be carried out under vacuum when the fermentation product is unstable at the atmospheric boiling point of the broth. In a given case it may be advisable to use an azeotropic distillation process to concentrate the broth, as by addition of an azeotrope-forming solvent such as benzene, toluene, 2-ethylhexanol, pentanol and the like.

When the fermentation product is insoluble in the broth, or is in or firmly bound to the cells in the fermentation broth, the broth may be concentrated economically by filtering or centrifuging it to remove a substantial part of the water, together with water-soluble solids such as residual nutrients, salts and sugars. The remaining biomass and lipids, containing of course an appreciable amount of water, may be subjected to the process of this invention, and the separated aqueous phase may be disposed of or recycled.

A particularly advantageous method of concentrating fermentation broth, which avoids disposing of any waste, is carried out by concentrating the broth by filtration or, preferably, centrifugation, and then evaporating the aqueous phase. The solids from the evaporation are mixed with the solids from the centrifugation. The combined solids constitute the concentrated fermentation broth which is subjected to the process of this invention to prepare a feed premix, and the only waste is the pure water condensed from the evaporation step.

It should be noted that the azeotropic concentration of fermentation broth creates a rather special situation. The distillation is performed by adding the azeotrope-forming solvent to the broth, and distilling off enough azeotrope to remove the desired amount of the water. At the end of the distillation, all of the non-volatile components of the broth remain in the still, dissolved or suspended in a mixture of water and the solvent. That residue is the concentrated fermentation broth, and is handled in the process of this invention just as any other concentrated broth, except the liquid to be removed by drying is partly solvent. The clay absorbs the solvent just as well as it absorbs water.

The carrier used in the process of this invention is a non-swelling absorptive clay. Clays which swell to an appreciable extent in the presence of water are not appropriate, because they tend to trap the fermentation products when in the swollen state, and to make them biologically unavailable to an unacceptable degree. The western United States bentonites are the most typical example of water-swelling clays. On the other hand, the clay must be capable of absorbing a considerable amount of oily, sticky material in order to achieve the desired handling qualities in the product. Suitable clays are capable of absorbing at least their own weight of water or of oil.

It has been found that the most preferred clay for use in this process is a montmorillonite obtained from mines in the southeastern United States, especially from Georgia and Mississippi. Such clays are generically called calcium magnesium montmorillonites. It should be emphasized that these clays are physically and chemically quite distinct from the sodium bentonites of the western United States which are to be avoided as carriers in this process.

Many other non-swelling absorptive clays may also be used. The attapulgite clays, such as those mined in the southeastern United States, are very appropriate and are also preferred carriers. Still further useful clays include the talcs, and the vermiculites, another type of montmorillonite.

It should be noted that the best choice of a carrier for a given application of this process depends in part on the characteristics of the broth in which the fermentation product is produced, and upon the desired potency of the premix to be prepared. As will be explained in full detail below, the amount of clay which can be used depends on the potencies of the broth and the product; thus, if the broth is relatively weak and a concentrated premix is to be prepared, only a small amount of clay will be added and a particularly absorptive carrier must therefore be used.

The non-swelling absorptive clay is used as substantially the only carrier in the premix product. Of course, small amounts of other substances may need to be added, such as flocculation agents pH-adjusting chemicals, substances which improve the stability of the fermentation product, and the like. It may also be found, in an individual case, that a small amount, in the range of a few percent by weight, of an agent to adjust the physical properties of the product may be necessary. Such agents could include, for example, a collodial agent such as gelatin, carboxymethycellulose or the like to confer additional toughness on the product, or a preservative to improve the product's stability in storage. It will be understood that minor amounts of such agents do not affect the fact that the non-swelling absorptive clay is substantially the only carrier.

The minimum amount of the non-swelling absorptive clay to be added to the biomass and lipids is the amount necessary to provide a hard, dry, free-flowing product. The minimum amount varies with the lipid and potency concentrations of the particular fermentation broth. The exact minimum amount is easily determined for each fermentation product by a few simple experiments, using different amounts of clay, and the minimum amount further depends, of course, on the identity of the clay to be used. In general, however, it can be said that the minimum amount of clay is about 25% of the amount of fermentation solids, and the preferred range is from 25% to 150% of the amount of fermentation solids.

In this document, the term fermentation solids is used to refer to the dry matter contained in the fermentation broth or concentrated fermentation broth from which the animal feed premix is prepared. It consists of biomass, lipids and the fermentation product itself. If the entire fermentation broth is dried down, the fermentation solids also includes the water-soluble salts, sugars and the like in the broth; when concentrated broth is used, some of those water-soluble constituents may be removed with the water, as discussed.

The following table is inserted to illustrate various conditions of the fermentation broth and the clay, and shows the range of potencies of the animal feed premixes which result. Each line of the table is based on 1,000 liters of a hypothetical fermentation broth or concentrated fermentation broth, having the fermentation solids content shown in the first column and the potency—the content of fermentaton product—shown in the second column. The third column shows the amount of clay, in kilograms, to be used to prepare a premix from the substance described in the first two columns. The last two columns of the table show the total weight of premix to be obtained, and the percent of fermentation product in that amount of premix. Thus, the first line of the table describes a broth, or a concentrated fermentation broth, which supplies 75 kilograms of fermentation solids, based on 1,000 liters. The addition of 50 kilograms of clay gives 125 kilograms of animal feed premix, containing 10 kilograms of fermentation product, or 8% activity in the premix.

TABLE I

| | Solids mg./ml. | Potency mg./ml. | Clay Kg. | Premix | |
| --- | --- | --- | --- | --- | --- |
| | | | | Kilos | % active |
| 1 | 75 | 10 | 50 | 125 | 8 |
| 2 | 100 | 35 | 25 | 125 | 28 |
| 3 | 125 | 25 | 35 | 160 | 15.6 |
| 4 | 140 | 60 | 193 | 333 | 18 |
| 5 | 210 | 40 | 210 | 420 | 9.5 |
| 6 | 400 | 100 | 150 | 550 | 18.2 |
| 7 | 850 | 140 | 100 | 950 | 14.7 |

The reader will note that, in some cases, it is possible to prepare quite concentrated premixes by the process of this invention, such as the 28% premix in the table above. It is entirely possible that such a concentrated premix would by further diluted for sale and use with an inert diluent, such as pulverized rice hulls, granular clay, soybean meal or the like. It will be understood that such further dilution of a premix made according to the process of this invention has no bearing on the status of the non-swelling absorptive clay as the only carrier, because such dilution with an inert diluent occurs after the manufacture of a usable premix by the process of this invention.

The skilled reader will recognize that a considerable amount of water accompanies the fermentation solids mentioned in the table above, and that the amount of water may be so great that a mixture prepared by simply adding the designated amount of clay to the fermentation broth will be a liquid. The drying and preparation of a granulated product from such a liquid would be very difficult. Accordingly, in order to keep the processing in a solid phase, a process engineer would resort to recycling of dried premix back through the process. The handling and calculations are believed to be within the skill of such engineers, but a few illustrations will be given.

For example, if the fermentation broth described in the third line of Table 1 were to be combined with the 35 kilograms of clay called for in that line, the resulting mixture would clearly be a liquid, since it would consist of 1,000 liters of fermentation broth and only 35 kilograms of clay. It has been found that typical mixtures of fermentation solids with the clays useful in this invention can be handled as solids at water contents up to about 60% by weight. Therefore, the 160 kilograms of total solid matter to be obtained in line 3 of Table 1 could be handled, mixed with up to 240 kilograms of water (or solvent, in the case of an azeotropically concentrated broth).

Thus, the approximately 875 kilograms of water in each 1000 liters of fermentation broth requires about 583 kilograms of dry solids to absorb it. In other words, for every 160 kilograms of dry product withdrawn from the process, 583 kilograms of dry product must be returned to the initial mixer to absorb the water in the entering fermentation broth. The recycle ratio is thus 3.64.

Another sample calculation, based on the fifth line of Table 1, would proceed as follows. The entering 1000 liters of fermentation broth would contain about 790 kilograms of water, and the 420 kilograms of dry premix obtained from that 100 liters of fermentation broth would be capable of holding 630 kilograms of water in absorbed form. The necessary recycle ratio, therefore, would be 1.25, and it would therefore be necessary to recycle 525 kilograms of dry product back through the process for every 420 kilograms of product withdrawn.

Finally, a premix according to this invention is processed to give it the desired particle size by drying and sizing it.

The most preferred process consists of delumping the wet dough consisting of the fermentation broth or concentrated fermentation broth mixed with the clay to allow efficient drying. For example, the dough may be extruded through a perforated plate or screen having openings in the size range of a few millimeters, or shredded in some manner. Any convenient drying equipment is appropriate; the preferred dryers are those which use a stream of hot air such as fluid bed dryers, vibrating bed dryers, swept tray dryers and the like. The dried extrudate is then pelleted, according to the preferred process, through a conventional pellet mill of the type which forces the solid material through perforations in a toroidal die. The size of the perforations is chosen to give compact pellets; it is convenient to use pelleting dies having perforations of about 5 millimeter diameter.

The pelleted product is then broken up in a gentle size reduction apparatus, such as a roller mill or pin mill, for example, and is finally classified to the desied size range, as by screening, aspiration, air-classification, and the like. The particles which are coarser than the desired product size range are returned to the size reduction apparatus, and the extreme fines can be returned to the initial mixer as part of the recycle stream to be remixed with wet fermentation solids or returned to the pellet mill.

One of the major advantages of this invention is the readiness with which the biomass-clay mixture is pelleted. Previous biomass premixes, especially those containing high lipids, were very difficult to pellet and size, and presented extremely stubborn handling problems.

It is notable that feed premixes prepared in this manner are substantially dust-free.

It has been found that the use of a pelleting operation, as described above, to compact and harden the product is very beneficial, and the inclusion of a pelleting operation in the process is very highly preferred. Other methods of granulation, however, are functional in the process of this invention. For example, the fermentation broth-clay mixture can be forced in the wet state through a sieve, dried and screened to select the desired particle size range. In another alternative process, the wet mixture can be compacted through a pair of rolls, and the compacted mixture then dried, cracked in a gentle particle size reduction device as described above, and classified to select the desired particle size range. Further, the wet mixture can be extruded, dried, cracked and screened without the use of a pelleting operation.

Many other alternative methods of obtaining the desired particle size range will occur to process engineers; the exact process used is not particularly important to the success of this invention. As has been carefully explained above, the most significant benefit of this invention is its ability to prepare feed premixes, economically and conveniently, which include substantially the entire biomass produced by the fermentation, and thereby to avoid isolating the fermentation product while still obtaining convenient processing of the premix in the solid form and avoiding difficulties in processing and handling which are usual in the preparation of biomass-containing feed premixes.

The following examples of the preparation of feed premixes from fermentation broths and concentrated fermentation broths are supplied to assure that the reader fully understands the method of operation of this invention, and the advantages to be obtained from it.

Example 1

Narasin premix from azeotropically distilled broth.

It was desired to prepare a 10% by weight narasin premix from a whole fermentation broth containing 17 mg./ml. of narasin, 78 mg./ml. of total solids and 10.2 mg./ml. of lipids. An 18.3 liter portion of the whole broth was concentrated by azeotropic distillation with amyl alcohol to obtain about 1530 g. of concentrated fermentation broth containing an estimated 5—8% of water. The concentrated fermentation broth was mixed with 925 g. of calcium magnesium montmorillonite from a Georgia source, using a small paddle mixer. The mixed product was dried in forced hot air to obtain 2133.5 g. of premix material containing 100 mg./g. of narasin by chemical analysis. The premix was not finished through the granulation step because of the small size of the batch.

Example 2

Hygromycin premix from whole broth.

A batch of hygromycin whole broth containing 5.8 mg./ml. of hygromycin and 98 mg./ml. of total solids was obtained, and was converted to a feed premix by addition of 900 g. of calcium magnesium nontmorillonite of Georgia origin. The mixture was prepared by adding the broth to the clay in seven applications of 600 ml. each, with drying between the applications of broth. Thus, the broth-clay mixtures contained 45% water before they were dried. The additions were made in a small paddle mixer, and simulated a process in which the recycle ratio is 7. The product was not finished and granulated after the final drying step, because of the lack of suitable equipment for such a small batch. The dried mixture after the final application contained 1.91% by weight of hygromycin, and 2% of water.

Example 3

Actaplanin premix from whole broth.

An actaplanin whole fermentation broth containing 4.6 mg./ml. of actaplanin and 67.9 mg./ml. of total solids was chosen, and was converted to a feed premix by addition of calcium magnesium montmorillonite from Georgia. The premix was prepared in a paddle mixer according to the general process of Example 2 by addition of 10 additions of 500 ml. of whole broth each to 429 g. of clay, and drying the mixture between applications of broth. After the final addition and drying, the ungranulated premix contained 2.3% by weight of actaplanin and about 2% of water.

Example 4

Monensin premix from whole broth.

A monensin whole fermentation broth containing 41.9 mg./ml. of monensin and 127 mg./ml. of total solids was converted to a premix by addition of Georgia calcium magnesium montmorillonite. A 1400 g. portion of the clay was used to dry and absorb 15 liters of fermentation broth by mixing the liquid with the clay in a small paddle mixer. The broth was added to the clay in three applications of 4, 4 and 7 liters, respectively, providing water contents at the three stages of 60.7%, 53.6% and 53.9% by weight respectively. The mixture was dried after each application of fermentation broth, the dried product after the last application contained 17.3% of monensin, and 5.7% of water.

Example 5

Narasin premix from concentrated fermentation broth.

Four thousand liters of narasin fermentation broth containing 12.44 mg./ml. of narasin and 93.0% by weight of water was flocculated by addition of calcium hydroxide sufficient to raise the pH to about 11—12, and immediate neutralization to pH 7.5—8 with sulfuric acid. The broth was made sterile by addition of 20 liters of formaldehyde solution, was heated to 45°, and was then concentrated by centrifugation on a continuous centrifuge. The solids from the centrifugation amounted to 755.7 kilograms of conentrated fermentation broth, containing 55.8 mg./g. of narasin, and 77.4% of water.

The concentrated fermentation broth was mixed with Georgia calcium magnesium montmorillonite and with recycled premix from earlier similar batches, in the proportion of 29 kilograms of concentrated fermentation broth, 26.8 kilograms of dried narasin premix recycle, and 4.3 kilograms of montmorillonite, in a paddle-type blender. Twenty-six such blends were made, and the average potency of the blended mixture was 97.7 mg./g.; the average water content was 38.6%.

The blended mixture was extruded through an extruder having a screen perforated with 2.5 millimeter holes, and the extruded product was dried in a vibrating bed dryer operated so that the dried product left the dryer at 90—95°. The dried product was cooled with air to about 45°, to produce 614.1 kilograms of dry product, having a potency of 162.7 mg. of narasin per gram of product.

A portion of the above dried product was combined with portions of other similar lots and was pelleted on a pellet mill having a die 25 mm. thick, perforated with 5 mm. holes. The pelleted product was cooled and was cracked through a roller mill spaced at 0.75 mm., and the cracked product was screened on a rotary sieving apparatus. The particles retained on a U.S. 30 mesh screen were returned to the roller mill, and the particles which passed a U.S. 80 mesh screen were diverted to be used as recycle in future lots. All material −30+80 mesh was passed through an aspirator to remove dust. The product obtained from the sizing operation was subjected to sieve analysis on U.S. Standard screens, and was found to contain no 30 mesh particles, 94.7% of −30+80 mesh, 5.1% of −80+150 mesh, and 0.2% of particles finer than 150 mesh.

Example 6

Dust analysis

A sample of a narasin premix made according to the process of Example 5 was analyzed for dust content on an instrument which counts particles of certain size ranges by a light-scattering technique. The particles smaller than 20 microns were found to be 0.0050% of the sample.

**Claims for the Contracting States: BE, CH, DE, FR, GB, IT, LI, LU, NL, SE**

1. A particulate animal feed premix comprising, as its active ingredient, a fermentation product which is chemically stable and biologically available in the presence of a non-swelling absorptive clay, substantially all of the biomass and the lipids in the fermentation broth which produced the fermentation product, wherein the fermentation broth contains at least 10 milligrams per millilitre of lipids, and, as substantially the only carrier, an amount of a non-swelling absorptive clay which is at least about 25% of the amount of fermentation solids.

2. A premix according to claim 1 wherein the fermentation product is monensin, narasin, hygromycin, actaplanin, salinomycin, lasalocid, avoparcin, thiopeptin, flavomycin, virginiamycin, avilamycin or bacitracin.

3. A premix according to claim 1 or 2 wherein the fermentation product is monensin.

4. A premix according to claim 1 or 2 wherein the fermentation product is narasin.

5. A premix according to any one of claims 1 to 4 wherein the clay is calcium magnesium montmorillonite, attapulgite, talc or vermiculite.

6. A premix according to any one of claims 1 to 5 wherein the clay is calcium magnesium montmorillonite.

7. A process for preparing a particulate animal feed premix according to any one of claims 1 to 6 which comprises adding to the fermentation broth which produced the fermentation product, and which contains at least 10 milligrams per millilitre of lipids, or to a concentrate thereof, as substantially the only carrier, an amount of a non-swelling absorptive clay which is at least about 25% of the amount of fermentation solids, and processing the mixture to give it the desired particle size.

8. A process according to claim 7 wherein the fermentation broth is concentrated by filtration or centrifugation.

9. A process according to claim 7 or 8 wherein the mixture is processed by pelleting, drying and breaking up the resulting pellets.

**Claims for the Contracting State: AT**

1. A process for preparing a particulate animal feed premix comprising, as its active ingredient, a fermentation product which is chemically stable and biologically available in the presence of a non-swelling absorptive clay, substantially all of the biomass and the lipids in the fermentation broth which produced the fermentation product, which broth contains at least 10 milligrams per millilitre of lipids, and, as substantially the only carrier, an amount of a non-swelling absorptive clay which is at least the amount necessary to confer acceptable handling properties upon the mixture which comprises adding to the fermentation broth which produced the fermentation product, or to a concentrate thereof, as substantially the only carrier, an amount of a non-swelling absorptive clay which is at least about 25% of the amount of fermentation solids, and processing the mixture to give it the desired particle size.

2. A process according to claim 1 wherein the fermentation broth is concentrated by filtration or centrifugation.

3. A process according to claim 1 or 2 wherein the mixture is processed by pelleting, drying and breaking up the resulting pellets.

4. A process for preparing a premix according to any one of claims 1 to 3 wherein the fermentation product is monensin, narasin, hygromycin, actaplanin, salinomycin, lasalocid, avoparcin, thiopeptin, flavomycin, virginiamycin, avilamycin or bacitracin.

5. A process for preparing a premix according to any one of claims 1 to 4 wherein the fermentation product is monensin.

6. A process for preparing a premix according to any one of claims 1 to 4 wherein the fermentation product is narasin.

7. A process for preparing a premix according to any one of claims 1 to 5 wherein the clay is calcium magnesium montmorillonite, attapulgite, talc or vermiculite.

8. A process for preparing a premix according to any one of claims 1 to 7 wherein the clay is calcium magnesium montmorillonite.

**Patentansprüche für die Vertragsstaaten BE, CH, DE, FR, GB, IT, LI, LU, NL, SE**

1. Körniges Tierfuttergemisch, dadurch gekennzeichnet, daß es als Wirkstoff, welcher ein in Anwesenheit eines nichtquellenden absorptionsfähigen Tons chemisch stabiles und biologisch verfügbares Fermentationsprodukt ist, praktisch die Gesamtmenge der in der Fermentationsbrühe, die das Fermentationsprodukt gebildet hat und wenigstens 10 mg Lipide pro ml aufweist, vorhandenen Biomasse und Lipide und als praktisch einzigen Trägerstoff eine solche Menge eines nichtquellenden absorptionsfähigen Tons, die wenigstens etwa 25% der Menge der Fermentationsfeststoffe ausmacht, enthält.

2. Tierfuttervorgemisch nach Anspruch 1, dadurch gekennzeichnet, daß das Fermentationsprodukt Monensin, Narsin, Hygromycin, Actaplanin, Salinomycin, Lasalocid, Avoparcin, Thiopetin, Flavomycin, Virginiamycin, Avilamycin oder Bacitracin ist.

3. Tierfuttervorgemisch nach Anspruch 1 oder 2, dadurch gekennzeichnet, daß das Fermentationsprodukt Monensin ist.

4. Teirfuttervorgemisch nach Anspruch 1 oder 2, dadurch gekennzeichnet, daß das Fermentationsprodukt Narasin ist.

5. Tierfuttervorgemisch nach einem der Ansprüche 1 bis 4, dadurch gekennzeichnet, daß der Ton Calciummagnesiummontmorillonit, Attapulgit, Talkum oder Vericulit ist.

6. Tierfutter vorgemisch nach einem der Ansprüche 1 bis 5, dadurch gekennzeichnet, daß der Ton Calciummagnesiummontmorillonit ist.

7. Verfahren zur Herstellung eines körnigen Tierfuttervorgemisches nach einem der Ansprüche 1 bis 6, dadurch gekennzeichnet, daß man der Fermentationsbrühe, die das Fermentationsprodukt gebildet hat und wenigstens 10 mg Lipide pro ml aufweist, oder einem Konzentrat hiervon als praktisch einzigen Trägerstoff eine solche Menge eines nichtquellenden absorptionsfähigen Tons, die wenigstens etwa 25% der Menge der Fermentationsfeststoffe ausmacht, zusetzt und das erhaltene Gemisch dann zur gewünschten Teilchengröße verarbeitet.

8. Verfahren nach Anspruch 7, dadurch gekennzeichnet, daß die Fermentationsbrühe durch Filtration oder Zentrifugation konzentriert wird.

9. Verfahren nach Anspruch 7 oder 8, dadurch gekennzeichnet, daß das Gemisch durch Pelletisierung, Trocknung und Aufbrechen der erhaltenen Pellets verarbeitet wird.

**Patentansprüche für den Vertragsstaat: AT**

1. Verfahren zur Herstellung eines körnigen Tierfuttervorgemisches, das als Wirkstoff, welcher ein in Anwesenheit eines nichtquellenden absorptionsfähigne Tons chemisch stabiles und biologisch verfügbares Fermentationsprodukt ist, praktisch die Gesamtmenge der in der Fermentationsbrühe, die das Fermentationsprodukt gebildet hat und wenigstens 10 mg Lipide pro ml aufweist, vorhandenen Biomasse und Lipide und als praktisch einzigen Trägerstoff eine solche Menge eines nichtquellenden absorptionsfähigen Tons, die wenigstens der Menge entspricht, welche für die Bildung eines ausreichend handhabbaren Gemisches erforderlich ist, enthält, dadurch gekennzeichnet, daß man der Fermentationsbrühe, die das Fermentationsprodukt gebildet hat, oder einem Konzentrat hiervon als praktisch einzigen Trägerstoff eine solche Menge eines nichtquellenden absorptionsfähigen Tons, die wenigstens etwa 25% der Menge der Fermentationsfeststoffe ausmacht, zusetzt und das erhaltene Gemisch dann zur gewünschten Teilchengröße verarbeitet.

2. Verfahren nach Anspruch 1, dadurch gekennzeichnet, daß die Fermentationsbrühe durch Filtration oder Zentrifugation konzentriert wird.

3. Verfahren nach Anspruch 1 oder 2, dadurch gekennzeichnet, daß das Gemsich durch Pelletisierung, Trocknung und Aufbrechen der erhaltenen Pellets verarbeitet wird.

4. Verfahren zur Herstellung eines Tierfuttervorgemisches nach einem der Ansprüche 1 bis 3, dadurch gekennzeichnet, daß man als Fermentationsprodukt Monensin, Narasin, Hygromycin, Actaplanin, Salinomycin, Lasalocid, Avoparcin, Thiopeptin, Flavomycin, Virginiamycin, Avilamycin oder Bacitracin verwendet. .

5. Verfahren zur Herstellung eines Tierfuttervorgemisches nach einem der Ansprüche 1 bis 4, dadurch gekennzeichnet, daß man als Fermentationsprodukt Monensin verwendet.

6. Verfahren zur Herstellung eines Tierfuttervorgemisches nach einem der Ansprüche 1 bis 4, dadurch gekennzeichnet, daß man als Fermentationsprodukt Narasin verwendet.

7. Verfahren zur Herstellung eines Tierfuttervorgemisches nach einem der Ansprüche 1 bis 5, dadurch gekennzeichnet, daß man als Ton Calciummagnesiummontmorillonit, Attapulgit, Talkum oder Vermiculit verwendet.

8. Verfahren zur Herstellung eines Tierfuttervorgemisches nach einem der Ansprüche 1 bis 7, dadurch gekennzeichnet, daß man als Ton Calciummagnesiummontmorillonit verwendet.

**Revendications pour les Etats Contractants: BE, CH, DE, FR, GB, IT, LI, LU, NL, SE**

1. Prémélange d'aliments en particules pour animaux comprenant, comme ingrédient actif, un produit de fermentation qui est chimiquement stable et biologiquement disponible en présence d'une argile absorbante et non gonflante, pratiquement toute la biomasse et les lipides du bouillon de fermentation formant le produit de fermentation, caractérisé en ce que le bouillon de fermentation contient au moins 10 mg/ml de lipides et, pratiquement comme unique support, une argile absorbante et non gonflante en une quantité qui est d'au moins environ 25% de la quantité des solides de fermentation.

2. Prémélange selon la revendication 1, caractérisé en ce que le produit de fermentation est la monensine, la narasine, l'hygromycine, l'actaplanine, la salinomycine, le lasalocide, l'avoparcine, la thiopeptine, la flavomycine, la virginiamycine, l'avilamycine ou la bacitracine.

3. Prémélange selon la revendication 1 ou 2, caractérisé en ce que le produit de fermentation est la monensine.

4. Prémélange selon la revendication 1 ou 2, caractérisé en ce que le produit de fermentation est la narasine. .

5. Prémélange selon l'une quelconque des revendications 1 à 4, caractérisé en ce l'argile est la montmorillonite de calcium-magnésium, l'attapulgite, le talc ou la vermiculite.

6. Prémélange selon l'une quelconque des revendications 1 à 5, caractérisé en ce que l'argile est la montmorillonite de calcium-magnésium.

7. Procédé de préparation d'un prémélange d'aliments en particules pour animaux selon l'une quelconque des revendications 1 à 6, caractérisé en ce qu'il consiste à ajouter, au bouillon de fermentation donnant le produit de fermentation et contenant au moins 10 mg/ml de lipides ou à un bouillon de fermentation concentré, pratiquement comme unique support, une argile absorbante et non gonflante en une quantité qui est au moins d'environ 25% de la quantité des solides de fermentation, puis traiter le mélange pour lui conférer la granularité désirée.

8. Procédé selon la revendication 7, caractérisé en ce que le bouillon de fermentation est concentré par filtration ou centrifugation.

9. Procédé selon la revendication 7 ou 8, caractérisé en ce qu'on traite le mélange par pastillage, puis on sèche et divise les pastilles obtenues.

**Revendications pour l'Etat Contractant: AT**

1. Procédé de préparation d'un prémélange d'aliments en particules pour animaux comprenant, comme ingrédient actif, un produit de fermentation qui est chimiquement stable et biologiquement disponible en présence d'une argile absorbante et non gonflante, pratiquement toute la biomasse et les lipides du bouillon de fermentation donnant le produit de fermentation, ce bouillon contenant au moins 10 mg/ml de lipides et, pratiquement comme unique support, une argile absorbante et non gonflante en une quantité qui est au moins la quantité nécessaire pour conférer des propriétés de manutention acceptables au mélange, caractérisé en ce qu'il consiste à ajouter au bouillon de fermentation donnant le produit de fermentation ou à un bouillon de fermentation concentré, pratiquement comme unique support, une argile absorbante et non gonflante en une quantité qui est d'au moins environ 25% de la quantité des solides de fermentation, puis traiter le mélange pour lui conférer la granularité désirée.

2. Procédé selon la revendication 1, caractérisé en ce que le bouillon de fermentation est concentré par filtration ou centrifugation.

3. Procédé selon la revendication 1 ou 2, caractérisé en ce qu'on traite le mélange par pastillage, puis on sèche et divise les pastilles obtenues.

4. Procédé de préparation d'un prémélange selon l'une quelconque des revendications 1 à 3, caractérisé en ce que la produit de fermentation est la monensine, la narasine, l'hygromycine, l'actaplanine, la salinomycine, le lasalocide, l'avoparcine, la thiopeptine, la flavomycine, la virginiamycine, l'avilamycine ou la bacitracine.

5. Procédé de préparation d'un prémélange selon l'une quelconque des revendications 1 à 4, caractérisé en ce que le produit de fermentation est la monensine.

6. Procédé de préparation d'un prémélange selon l'une quelconque des revendications 1 à 4, caractérisé en ce que le produit de fermentation est la narasine.

7. Procédé de préparation d'un prémélange selon l'une quelconque des revendications 1 à 5, caractérisé en ce que l'argile est la montmorillonite de calcium-magnésium, l'attapulgite, le talc ou la vermiculite.

8. Procédé de préparation d'un prémélange selon l'une quelconque des revendications 1 à 7, caractérisé en ce que l'argile est la montmorillonite de calcium-magnésium.